# EUROPÄISCHE PATENTSCHRIFT

(11) **EP 2 893 209 B1**
(45) Veröffentlichungstag und Bekanntmachung des Hinweises auf die Patenterteilung: **09.11.2016**
(21) Anmeldenummer: 13771366.5
(22) Anmeldetag: 03.09.2013
(51) Int. Cl.: F16D 13/70

(54) **VERBINDUNGSEINRICHTUNG ZWISCHEN ZWEI ANTRIEBSBAUTEILEN**
CONNECTING DEVICE BETWEEN TWO DRIVE COMPONENTS
DISPOSITIF DE RACCORDEMENT ENTRE DEUX ÉLÉMENTS D'ENTRAÎNEMENT

(30) Priorität: 06.09.2012 DE 102012215835
(43) Veröffentlichungstag der Anmeldung: 15.07.2015
(73) Patentinhaber: Schaeffler Technologies AG & Co. KG, 91074 Herzogenaurach (DE)
(72) Erfinder: JANZ, Thomas, 77815 Bühl (DE); MENDE, Hartmut, 77815 Bühl (DE); STRASSER, Pascal, F-67250 Aschbach (FR)
(86) Internationale Anmeldenummer: PCT/DE2013/200150
(87) Internationale Veröffentlichungsnummer: WO 2014/037002

(56) Entgegenhaltungen:
- WO-A1-2010/052399
- GB-A- 2 467 802
- US-A1- 2011 053 697

## Beschreibung

Die Erfindung betrifft eine Verbindungseinrichtung zur in Umfangsrichtung spielfreien Verbindung zweier um eine Drehachse drehenden Antriebsbauteile in einem Antriebsstrang mit über den Umfang verteilt angeordneten Verbindungspaarungen mit jeweils einem an einem ersten Antriebsbauteil angeordneten, axial offenen Laschenteil und einem an dem anderen Antriebsbauteil angeordneten, mit Axialspiel in das Laschenteil axial eingreifenden Bolzenteil.

Antriebsstränge von Kraftfahrzeugen werden als Baugruppen separat montiert und am Montageband zusammengesetzt. Beispielsweise werden eine Motorbaugruppe und eine Getriebebaugruppe miteinander verbunden. Je nach Ausbildung des Antriebsstrangs erfolgt diese Verbindung an unterschiedlichen Schnittstellen. Im einfachsten Fall wird eine Reibungskupplung auf ein Schwungrad der Brennkraftmaschine montiert und zur Verbindung von Motor- und Getriebebaugruppe die Getriebeeingangswelle axial in die Nabe der Kupplungsscheibe gesteckt. Eine Verbindung erfolgt dabei mittels einer Verschraubung des Motorgehäuses und einer Kupplungsglocke des Getriebes. Bei aufwendigeren Antriebssträngen, beispielsweise mit einem Doppelkupplungsgetriebe wird beispielsweise ein Drehschwingungsdämpfer an der Motorbaugruppe und das Kupplungsaggregat an der Getriebebaugruppe aufgenommen. Hierdurch wird eine Verbindung notwendig, die einerseits ein gegebenenfalls auftretendes Axialspiel, einen radialen Achsversatz und einen Versatzwinkel von Kurbelwelle und Getriebeeingangswelle(n) ausgleicht, andererseits aber eine spielfreie Verbindung in Umfangsrichtung gewährleistet, um das anstehende Moment ohne die Bildung von Klappergeräuschen zu übertragen. Aus der WO 2010/052 399 A1 ist eine gattungsgemäße Verbindungseinrichtung bekannt, bei der über den Umfang verteilt an einer Gegendruckplatte einer Doppelkupplung angeordnete axial offene Laschenteile vorgesehen sind, in die komplementär zu diesen an einem Scheibenteil eines Drehschwingungsdämpfers angeordnete, in tangentiale Richtung zur Drehachse angeordnete Bolzenteile eingreifen. Die Bolzenteile sind an Bügeln aufgenommen, welche nach dem Eingreifen mittels einer Schraubverbindung an den Bolzenteilen in Umfangsrichtung gegen die Laschenteile verschraubt werden, um das Umfangsspiel zwischen Bügeln und Laschenteilen zu eliminieren. Hierzu müssen in der Kupplungsglocke entsprechende Öffnungen vorgesehen werden, durch die die Verschraubung vorgenommen werden kann. Das Verschrauben an dem Montageband erfordert zusätzliche Arbeitsgänge beispielsweise durch Ausrichtung der Kurbelwelle auf eine fluchtende Anordnung der Bolzenteile auf die Öffnung(en) in der Kupplungsglocke und Verschrauben der Bolzenteile. Des Weiteren sind an der Verbindungseinrichtung verliersicher Muttern für die Bolzenteile vorzusehen.

Aufgabe der Erfindung ist daher, eine Verbindungseinrichtung vorzuschlagen, die einfach und kostengünstig ausgebildet ist und eine Verbindung von Antriebsteilen eines Antriebsstrangs am Montageband ermöglicht.

Die Aufgabe wird durch den Gegenstand des Anspruchs 1 gelöst. Die diesem untergeordneten Ansprüche geben einen vorteilhaft weitergebildeten Gegenstand wieder.

In der vorgeschlagenen Verbindungseinrichtung zur in Umfangsrichtung spielfreien Verbindung zweier um eine Drehachse drehender Antriebsbauteile mit über den Umfang verteilt angeordneten Verbindungspaarungen mit jeweils einem an einem ersten Antriebsbauteil angeordneten, axial offenen Laschenteil und einem an dem anderen Antriebsbauteil angeordneten, mit Axialspiel in das Laschenteil axial eingreifenden Bolzenteil ist das Bolzenteil in einer das Laschenteil axial übergreifenden und in Umfangsrichtung vorspannenden Federeinrichtung aufgenommen. Mittels dieser Federeinrichtung wird das Bolzenteil selbsttätig mit einer einstellbaren Vorspannung gegenüber dem Laschenteil vorgespannt. Hierdurch können zusätzliche Arbeitsschritte eingespart werden. Insbesondere entfällt ein Verschrauben der Verbindungseinrichtung von außen durch die Kupplungsglocke. Es hat sich als vorteilhaft erwiesen, drei über den Umfang verteilte Verbindungspaarungen vorzusehen, so dass eine einfache Zentrierung der beiden Antriebsbauteile erfolgen kann. Im Weiteren sind die Verbindungspaarungen in vorteilhafter Weise gleichmäßig über den Umfang verteilt. Bei entsprechender Wuchtung und insbesondere weiteren, eine gleichmäßige Verteilung behindernden Funktionsbauteilen eines oder beider Antriebsbauteile, beispielsweise Blattfedern einer Reibungskupplung, kann eine nicht gleiche Verteilung der Verbindungspaarungen vorgesehen sein.

Die Federeinrichtung ist in vorteilhafter Weise aus mit dem Bauteil verbundenen, das Laschenteil umgreifender Bügel gebildet, wobei ein erster Bügel das Bolzenteil fest aufnimmt und die Bügel gegeneinander gegen das Laschenteil in Umfangsrichtung vorgespannt sind. Das Bolzenteil ist hierbei bevorzugt mit dem ersten Bügel vernietet, kann aber auch gegen eine Anlagefläche des Bügels verrastet oder verschraubt oder in ähnlicher Weise zumindest einseitig in Richtung des anderen Bügels belastbar im ersten Bügel aufgenommen sein. Zur Ausbildung der Federwirkung kann zumindest einer der beiden Bügel elastisch gegen das Laschenteil vorgespannt sein. Ein Anschlag in Umfangsrichtung sichert hierbei das Auslenken der Bügel in Umfangsrichtung bei hohem Moment. Dieser Anschlag kann durch entsprechende Anschlagflächen des die Federeinrichtungen aufnehmenden oder bildenden Antriebsbauteils oder eines mit derselben Drehzahl drehenden Bauteils gebildet sein. Als besonders vorteilhaft hat sich erwiesen, wenn die Verlagerung des oder der Bügel von dem Bolzenteil selbst bereit gestellt wird. Hierzu durchgreift das Bügelteil den anderen Bügel, wobei zwischen einem Schließkopf des Bolzenteils und dem anderen Bügel ein entlang des Bolzenteils wirksamer Energiespeicher, beispielsweise eine Tellerfeder vorgesehen ist. Hierbei wird, beispielsweise durch Einfuhrschrägen an den Bügeln erleichtert, das Laschenteil auf das Bolzenteil geschoben. Hierbei wird zumindest ein Bügel elastisch erweitert und bei Annäherung der Antriebsbauteile wird die von Federkraft der Tellerfeder und der Federkraft der Bügel bereitgestellte Vorspannung der Bügel gegen das Laschenteil in Umfangsrichtung aufgebracht. Durch entsprechende Auslegung der Federkonstanten der Bügel und des Energiespeichers wird eine gegebenenfalls bei fehlender koaxialer Anordnung der Kurbelwelle und der Getriebeeingangswelle(n) eine zumindest geringe Taumelbewegung in der Verbindungseinrichtung ermöglicht.

Die Verbindungspaarungen werden radial außen an den Antriebsbauteilen vorgesehen. Hierzu können an den Antriebsbauteilen entsprechende radiale Erweiterungen wie radial erweiterte Flügel oder Laschen vorgesehen sein. Beispielsweise können die Laschenteile und/oder Bügel der Federeinrichtung wie Bolzenteilaufnahmen in Gussteile eingearbeitet oder aus einem aus Blech hergestellten Antriebsbauteil ausgestellt oder aus diesem umgelegt sein. Die Bolzenteile der Verbindungspaarungen und entsprechend die zu diesen richtungskomplementären Laschenteile können tangential zu der Drehachse und damit zu einem Umfang der Antriebsbauteile angeordnet sein. Alternativ können die Bolzenteile und Laschenteile der Verbindungspaarungen in radiale Richtung ausgerichtet sein. Es versteht sich, dass die Bolzenteile auch Anordnungen zwischen der tangentialen und radialen Anordnung einnehmen können.

Die Verbindungseinrichtung ist in bevorzugter Weise für eine Verbindung zwischen einem Drehschwingungsdämpfer und einem Kupplungsaggregat, vorzugsweise einer Doppelkupplung vorgesehen. Hierzu ist ein Antriebsbauteil einem Ausgangsteil eines Drehschwingungsdämpfers und das andere Antriebbauteil einem Kupplungsaggregat zugeordnet. Das dem Kupplungsaggregat zugeordnete Antriebsbauteil kann eine zentrale Gegenplatte oder ein mit diesem verbundenes Antriebsblech, ein Kupplungsgehäuse oder dergleichen sein. Das dem Drehschwingungsdämpfer zugeordnete Antriebsbauteil kann eine Sekundärschwungmasse, ein mit dieser verbundenes Antriebsblech oder ein anderes, mit dem Ausgangsteil des Drehschwingungsdämpfers verbundenes Blechteil oder massives Teil sein. Es versteht sich, dass die Verbindungseinrichtung auch für andere Schnittstellen, beispielsweise der Anbindung eines einem Getriebe hydrodynamischen Drehmomentwandlers an ein an der Brennkraftmaschine angeordnetes Antriebsblech (flexplate), bei hybridischen Antriebssträngen zwischen Elektromaschine und Brennkraftmaschine oder Getriebe und dergleichen vorgesehen sein kann.

Je nach Ausbildung der Verbindungseinrichtung und deren Antriebsbauteile können die Federeinrichtungen und dementsprechend die Laschenteile der Verbindungspaarungen antriebsseitig oder abtriebsseitig, also beispielsweise dem Drehschwingungsdämpfer oder dem Kupplungsaggregat zugeordnet sein. Es kann weiterhin in speziellen Ausführungsformen vorgesehen sein, das Laschenteil lediglich mit einer sich radial außen oder radial innen an dem Bolzenteil abstützenden Lasche auszubilden. Bei mehreren über den Umfang verteilten Verbindungspaarungen können sich radial außen und radial innen abstützende Laschen vorgesehen sein. Bei mehr als drei über den Umfang verteilten Laschen können diese in begrenztem Maße radial elastisch ausgebildet sein.

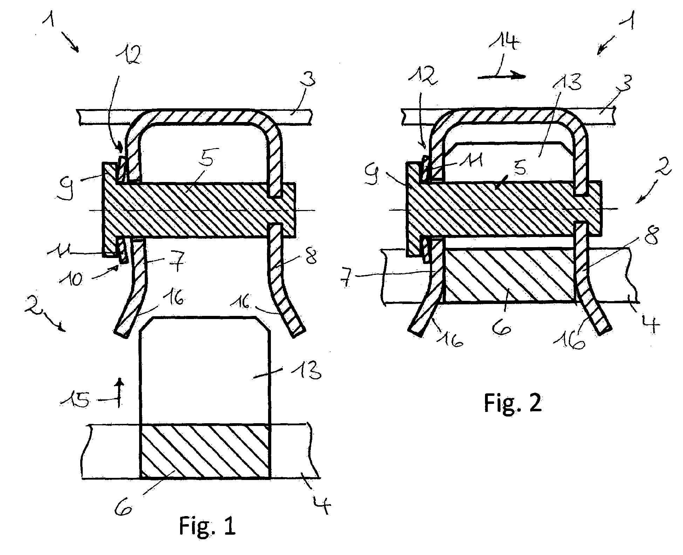

Die Erfindung wird anhand der in den Figuren 1 und 2 dargestellten Ausführungsbeispiele näher erläutert. Hierbei zeigen:
Figur 1 ein Detail einer Verbindungseinrichtung vor der Montage
und
Figur 2 ein Detail der Verbindungseinrichtung der Figur 1 im montierten Zustand.

Die Figuren 1 und 2 zeigen die Verbindungseinrichtung 1 vor dem montierten Zustand (Figur 1) und im montierten Zustand (Figur 2). Die Verbindungseinrichtung enthält mehrere, beispielsweise drei über den Umfang verteilte Verbindungspaarungen 2, die an den um eine innerhalb vorgegebener Toleranzen eines Achsversatzes, einer Koaxialität und eines Axialspiels gemeinsame Drehachse verdrehbaren Antriebsbauteilen 3, 4 aufgenommen oder aus diesen gebildet sind. Jede Verbindungspaarung 2 enthält das dem Antriebsbauteil 3 zugeordnete Bolzenteil 5 und das dem Antriebsbauteil 4 zugeordnete Laschenteil 6. Das Bolzenteil 5 ist mittels der hier einteilig mit dem Antriebsbauteil 3 verbundenen Bügel 7, 8 an dem Antriebsbauteil 3 aufgenommen. Das Bolzenteil 5 ist einseitig mit dem Bügel 8 fest vernietet und durchgreift den Bügel 7. Zwischen dem in Umfangsrichtung elastischen Bügel 7 und dem Schließkopf 9 des Bolzenteils 5 ist der Energiespeicher 10 - hier die Tellerfeder 11 - aufgenommen. In dem gezeigten Ausführungsbeispiel bilden die Bügel 7, 8 und der sich am Bolzenteil 5 abstützende Energiespeicher 10 die Federeinrichtung 12 zur Verspannung des Laschenteils 6. Im montierten Zustand greift das tangential zum Umfang angeordnete Bolzenteil 5 in die radial beabstandeten Laschen 13 axial ein, wodurch die beiden Antriebsbauteile 3, 4 in demselben Drehsinn in Richtung des Pfeils 14 um die Drehachse in beide Richtungen spielfrei angetrieben werden.

Zur Montage der Verbindungseinrichtung 1 werden die Antriebsbauteile 3, 4 gegeneinander axial zur Drehachse in Richtung des Pfeils 15 verlagert. Nach Kontakt der Laschen 13 an den Einführschrägen 16 der Bügel 7, 8 wird der Energiespeicher 10 vorgespannt und zumindest der Bügel 7 elastisch verlagert. Unter Aufbietung der Vorspannkraft in Umfangsrichtung erfolgt das weitere Fügen der Verbindungspaarungen 2 bis zu der vorgesehenen axialen Überschneidung von Laschenteil 6 und Bolzenteil 5. Die aufgebaute Vorspannung bleibt dabei erhalten und sorgt für eine spielfreie Verbindung der beiden Antriebsbauteile 3, 4 in Umfangsrichtung ohne weitere Maßnahmen.

### Bezugszeichenliste

- 1: Verbindungseinrichtung
- 2: Verbindungspaarung
- 3: Antriebsbauteil
- 4: Antriebsbauteil
- 5: Bolzenteil
- 6: Laschenteil
- 7: Bügel
- 8: Bügel
- 9: Schließkopf
- 10: Energiespeicher
- 11: Tellerfeder
- 12: Federeinrichtung
- 13: Lasche
- 14: Pfeil
- 15: Pfeil
- 16: Einführschräge

## Patentansprüche

1. Verbindungseinrichtung (1) zur in Umfangsrichtung spielfreien Verbindung zweier um eine Drehachse drehender Antriebsbauteile (3, 4) mit über den Umfang verteilt angeordneten Verbindungspaarungen (2) mit jeweils einem an einem ersten Antriebsbauteil (4) angeordneten, axial offenen Laschenteil (6) und einem an dem anderen Antriebsbauteil (3) angeordneten, mit Axialspiel in das Laschenteil (6) axial eingreifenden Bolzenteil (5), **dadurch gekennzeichnet, dass** das Bolzenteil (5) in einer das Laschenteil (6) axial übergreifenden und in Umfangsrichtung vorspannenden Federeinrichtung (12) aufgenommen ist.

2. Verbindungseinrichtung (1) nach Anspruch 1, **dadurch gekennzeichnet, dass** die Federeinrichtung (12) das Laschenteil (6) übergreifende Bügel (7, 8) enthält, wobei ein erster Bügel (8) das Bolzenteil (5) fest aufnimmt und die Bügel (7, 8) gegeneinander gegen das Laschenteil (6) in Umfangsrichtung vorgespannt sind.

3. Verbindungseinrichtung (1) nach Anspruch 2, **dadurch gekennzeichnet, dass** das Bolzenteil (5) den anderen Bügel (7) durchgreift und zwischen einem Schließkopf (9) des Bolzenteils (5) und dem anderen Bügel (7) ein entlang des Bolzenteils (5) wirksamer Energiespeicher (10) vorgesehen ist.

4. Verbindungseinrichtung (1) nach einem der Ansprüche 2 oder 3, **dadurch gekennzeichnet, dass** die Bügel (7, 8) und das Laschenteil (6) radial erweitert an den Antriebsbauteilen (3, 4) vorgesehen sind.

5. Verbindungseinrichtung (1) nach einem der Ansprüche 2 bis 4, **dadurch gekennzeichnet, dass** die Bügel (7, 8) durch Umlegen oder Ausstellen der Bügel aus einem aus Blech hergestellten Antriebsbauteil (3) gebildet sind.

6. Verbindungseinrichtung (1) nach einem der Ansprüche 1 bis 5, **dadurch gekennzeichnet, dass** das Bolzenteil (5) tangential zu einem Umfang der Antriebsbauteile (3, 4) angeordnet ist.

7. Verbindungseinrichtung nach einem der Ansprüche 1 bis 5, **dadurch gekennzeichnet, dass** das Bolzenteil in radiale Richtung angeordnet ist.

8. Verbindungseinrichtung (1) nach einem der Ansprüche 1 bis 7, **dadurch gekennzeichnet, dass** das eine Antriebsbauteil (3) einem Ausgangsteil eines Drehschwingungsdämpfers und das andere Antriebsbauteil (4) einem Kupplungsaggregat zugeordnet ist.

9. Verbindungseinrichtung (1) nach Anspruch 8, **dadurch gekennzeichnet, dass** die Federeinrichtung (12) dem Ausgangsteil zugeordnet ist.

10. Verbindungseinrichtung (1) nach Anspruch 8, **dadurch gekennzeichnet, dass** das Laschenteil dem Ausgangsteil zugeordnet ist.

## Claims

1. Connecting device (1) for the play-free connection in the circumferential direction of two drive components (3, 4) which rotate about a rotational axis, having connecting pairs (2) which are arranged distributed over the circumference with in each case one axially open lug part (6) which is arranged on a first drive component (4) and one pin part (5) which is arranged on the other drive component (3) and engages axially into the lug part (6) with axial play, **characterized in that** the pin part (5) is received in a spring device (12) which engages axially over the lug part (6) and prestresses it in the circumferential direction.

2. Connecting device (1) according to Claim 1, **characterized in that** the spring device (12) contains brackets (7, 8) which engage over the lug part (6), a first bracket (8) receiving the pin part (5) fixedly, and the brackets (7, 8) being prestressed against the lug part (6) in the circumferential direction with respect to one another.

3. Connecting device (1) according to Claim 2, **characterized in that** the pin part (5) engages through the other bracket (7), and an energy store (10) which is active along the pin part (5) is provided between a closing head (9) of the pin part (5) and the other bracket (7).

4. Connecting device (1) according to either of Claims 2 and 3, **characterized in that** the brackets (7, 8) and the lug part (6) are provided in a radially widened manner on the drive components (3, 4).

5. Connecting device (1) according to one of Claims 2 to 4, **characterized in that** the brackets (7, 8) are formed from a drive component (3) which is manufactured from sheet metal by way of folding over or flaring of the brackets.

6. Connecting device (1) according to one of Claims 1 to 5, **characterized in that** the pin part (5) is arranged tangentially with respect to a circumference of the drive components (3, 4).

7. Connecting device according to one of Claims 1 to 5, **characterized in that** the pin part is arranged in the radial direction.

8. Connecting device (1) according to one of Claims 1 to 7, **characterized in that** the one drive component (3) is assigned to an output part of a torsional vibration damper and the other drive component (4) is assigned to a coupling assembly.

9. Connecting device (1) according to Claim 8, **characterized in that** the spring device (12) is assigned to the output part.

10. Connecting device (1) according to Claim 8, **characterized in that** the lug part is assigned to the output part.

## Revendications

1. Dispositif de raccordement (1) pour le raccordement sans jeu dans la direction périphérique de deux composants d'entraînement (3, 4) tournant autour d'un axe de rotation, avec des appariements de raccordement (2) répartis sur la périphérie avec à chaque fois une partie de patte ouverte axialement (6) disposée au niveau d'un premier composant d'entraînement (4) et une partie de boulon (5) s'engageant axialement dans la partie de patte (6) avec un jeu axial, disposée au niveau du deuxième composant d'entraînement (3), **caractérisé en ce que** la partie de boulon (5) est reçue dans un dispositif de ressort (12) venant en prise par le dessus axialement avec la partie de patte (6) et exerçant une précontrainte dans la direction périphérique.

2. Dispositif de raccordement (1) selon la revendication 1, **caractérisé en ce que** le dispositif de ressort (12) contient des étriers (7, 8) venant en prise par le dessus avec la partie de patte (6), un premier étrier (8) recevant fixement la partie de boulon (5) et les étriers (7, 8) étant précontraints l'un par rapport à l'autre contre la partie de patte (6) dans la direction périphérique.

3. Dispositif de raccordement (1) selon la revendication 2, **caractérisé en ce que** la partie de boulon (5) vient en prise à travers l'autre étrier (7) et un accumulateur d'énergie (10) agissant le long de la partie de boulon (5) est prévu entre une tête de fermeture (9) de la partie de boulon (5) et l'autre étrier (7).

4. Dispositif de raccordement (1) selon l'une quelconque des revendications 2 ou 3, **caractérisé en ce que** les étriers (7, 8) et la partie de patte (6) sont prévus de manière élargie radialement au niveau des composants d'entraînement (3, 4).

5. Dispositif de raccordement (1) selon l'une quelconque des revendications 2 à 4, **caractérisé en ce que** les étriers (7, 8) sont formés par repliement ou sortie des étriers hors d'un composant d'entraînement (3) fabriqué en tôle.

6. Dispositif de raccordement (1) selon l'une quelconque des revendications 1 à 5, **caractérisé en ce que** la partie de boulon (5) est disposée tangentiellement par rapport à une périphérie des composants d'entraînement (3, 4).

7. Dispositif de raccordement selon l'une quelconque des revendications 1 à 5, **caractérisé en ce que** la partie de boulon est disposée dans la direction radiale.

8. Dispositif de raccordement (1) selon l'une quelconque des revendications 1 à 7, **caractérisé en ce que** l'un des composants d'entraînement (3) est associé à une partie de sortie d'un amortisseur d'oscillations de torsion et l'autre composant d'entraînement (4) est associé à un groupe d'accouplement.

9. Dispositif de raccordement (1) selon la revendication 8, **caractérisé en ce que** le dispositif de ressort (12) est associé à la partie de sortie.

10. Dispositif de raccordement (1) selon la revendication 8, **caractérisé en ce que** la partie de patte est associée à la partie de sortie.
